# EUROPEAN PATENT APPLICATION

(11) **EP 1 600 392 A1**
(43) Date of publication of application: **30.11.2005**
(21) Application number: 04425376.3
(22) Date of filing: 25.05.2004
(51) Int. Cl.: B65D 19/42

(54) **Trolley base and trolley with this base**

(71) Applicant: Italfil S.n.c. di Guerra Walter & C., 25039 Travagliato (Brescia) (IT)
(72) Inventor: Guerra, Mauro Roberto, c/o ITALFIL S.n.c., 25039 Travagliato (Brescia) (IT)
(74) Representative: Crippa, Paolo Ernesto

(57) **Abstract**

Described is a base for a trolley for storing and transporting merchandise, the trolley being substantially constituted by a hollow body (11) in plastic material obtained by means of an extrusion and blowing process. The resulting base has a structure that is both light and rigid and does not call for particular surface treatments. Also described is a trolley that utilizes this base.

## Description

The present invention relates to trolleys for storing merchandise and, more particularly, to a base for such trolleys.

Various types of trolleys are known for use in warehouses, supermarkets, airports, etc., substantially constituted by a base provided with wheels, with at least two side pieces that extend perpendicularly from the base and possibly with planes parallel to the base fixed to the side pieces. Some known trolleys are wholly realized in electrically welded steel wire, others are wholly realized in wood or rigid plastic material and yet others are realized with the use of said materials in different combinations, for example, the base may be of wood and the side pieces and the possible planes may be made of steel wire.

The known trolleys are associated with various drawbacks that are more or less grave according to the specific use that is made of the trolleys. In particular, especially when they are intended to be used in the open, they call for accurate finishing treatments to avoid their surfaces becoming deteriorated due to the effect of the exposure to atmospheric agents. These treatments are relatively demanding in terms of cost and maintenance. In any case, the known trolleys are rather heavy on account of the characteristics of the employed materials and the quantity of materials necessary for assuring the robustness and rigidity of the structure.

The principal object of the present invention_is to make available a base for a trolley and a trolley for the storage and transport of merchandise that will make it possible to avoid the drawbacks of the prior art, in particular trolleys that have a light structure and are yet rigid and do not call for particular surface treatments.

This and other objects are attained by realizing the base and the trolley defined in general terms in, respectively, Claim 1 and Claim 8 and, in particular embodiments, in the dependent claims.

The invention will be more readily understood from the following detailed description, which is given by way of example and is not to be considered limitative in any way, the description making reference to the attached drawings, of which:
- Figure 1 shows the trolley in accordance with the invention as a perspective exploded view,
- Figures 2 and 3 show perspective views, respectively from above and below, of a base in accordance with the invention with four wheels already mounted,
- Figure 4 is a plan view from above of the base in accordance with Figures 2 and 3,
- Figure 5 is a section view along the line V-V of the base shown in Figure 4,
- Figure 6 is a view of a detail of the base in accordance with Figures 2 to 5 with one wheel mounted, and
- Figure 7 is a section view along the line VII-VII of the detail of Figure 6 with the mounted wheel.

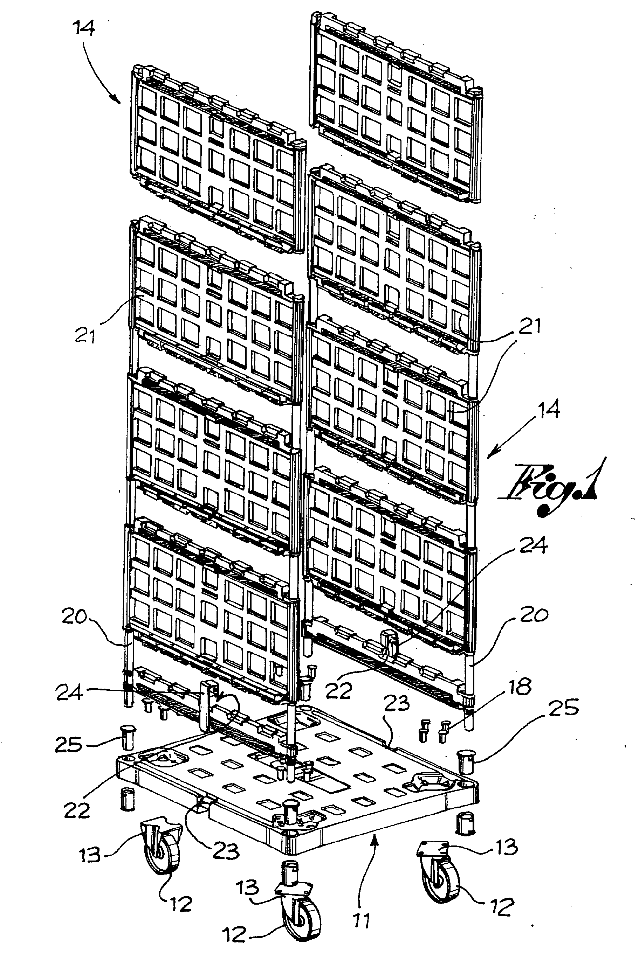

As can be seen in Figure 1, a trolley in accordance with the invention comprises a base 11 of a substantially quadrangular shape, four wheels 11 fixed to the base by means of respective stirrups 13 and two flanks 14 united with the base 11 along two opposite base sides.

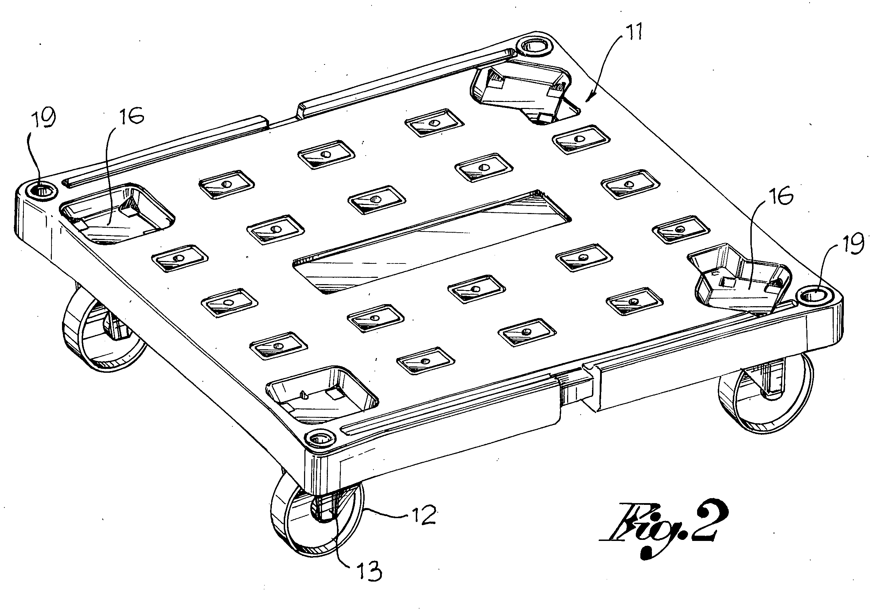

The base 11 is substantially constituted by a flattened hollow body of plastic material, high-density polyethylene for example, formed by means of a hot extrusion and blowing process. The blowing is performed in a mould shaped in such a manner as to form two thin principal walls that face each other and have reliefs facing towards the interior of the hollow body, as is shown in particular in Figures 2 to 5. In this example the reliefs are substantially of a boxlike shape with a flat end surface very close to the opposite wall. According to a variant, the mould may be configured in such a manner that the flat end surfaces arrive to touch the opposite wall and to become welded to it when the plastic material is still in the thermoplastic state.

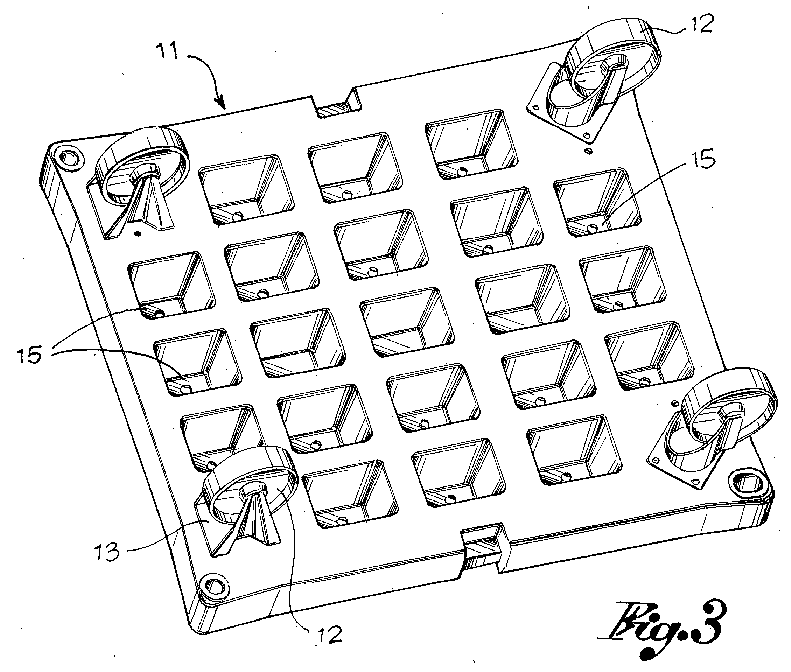

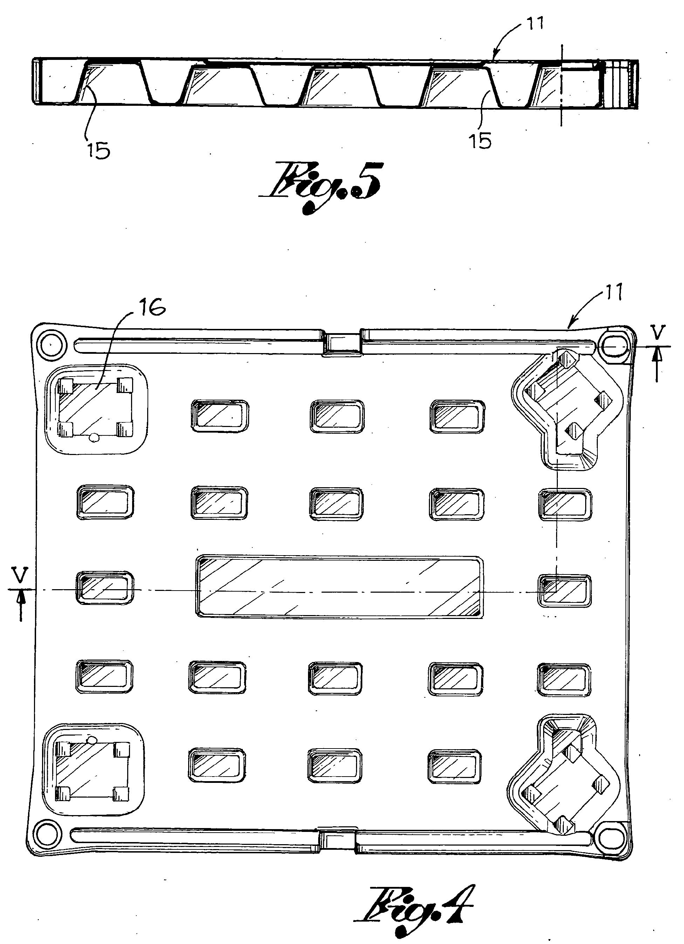

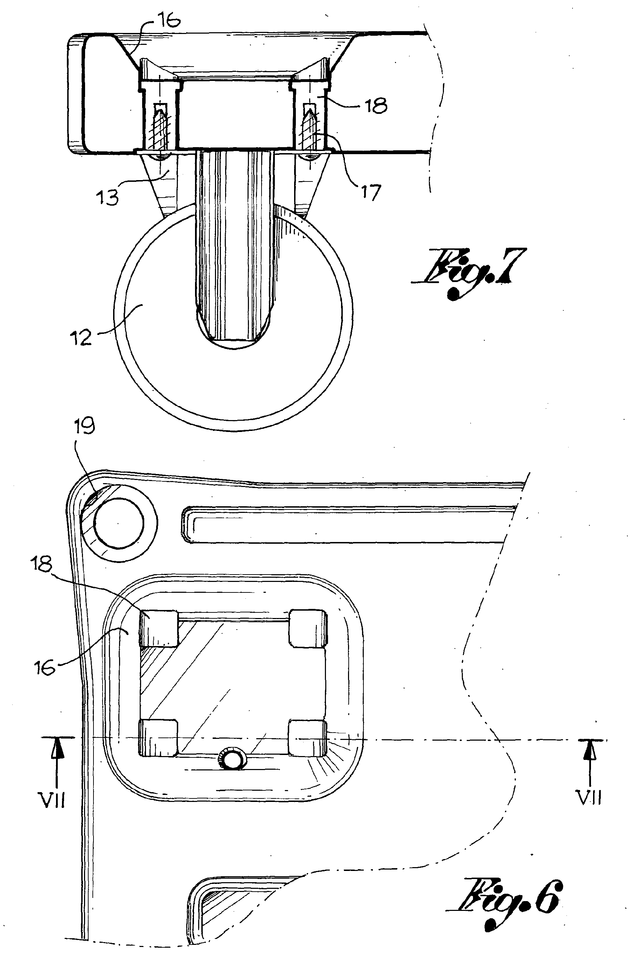

The reliefs, indicated by 15 in Figures 3 and 5, formed on the lower wall of the base, i.e. the face to which there will be fixed the stirrups with the wheels, are regularly arranged in such a manner as to constitute uniformly distributed support points for a load placed on the base. In this way one obtains a base that, thanks to the numerous reliefs that jointly and severally constitute a supporting surface, is rigid and, thanks to the small quantity of material utilized, is also light.

On the upper wall of the base in this example there are formed four reliefs, indicated by 16 in Figures 2 and 4 and likewise of boxlike shape, in proximity of the four corners of the base. These reliefs extend as far as the opposite wall in the positions of the mounting surfaces for the stirrups 13 of the wheels. The stirrups 13 are fixed to the base 11 by means of four self-threading screws 17 that pass through the two walls of the base and become engaged with corresponding cylindrical elements 18 arranged on the opposite wall, as is shown particularly in Figures 6 and 7.

Further reliefs are formed on one or the other of the two walls, or on both, in proximity of the corners of the base in such a manner as to form pairs of adjacent cup-like structures having the bases in common. The bases are at least partially removed after the blowing, thereby obtaining four through holes 19.

In the shown example the side pieces 14 of the trolley are constituted by four rod-shaped uprights 20 inserted in the through holes 19 of the base and by panels 21, once again preferably formed by means of extrusion and blowing, each of which has two through holes that extend parallel to two opposite sides and are crossed by the uprights, as is shown by Figure 1. A trolley with side pieces formed in this manner is described in detail in the international application PCT/IT03/00800 filed on 5 December 2003 and entitled "Trolley panel".

The panels 21 are united with each other by means of joints provided on their edges perpendicular to the uprights. The lowest panel on each side piece in this particular example has a limited vertical extension and is shaped in such a manner as to provide a seating 22 that, together with a corresponding seating 23 provided on the base 11, serves to fix the side piece 14 to the base. For this purpose there are provided two elastic elements 24 that are shaped in such a manner as to be capable of being inserted by means of a snap fit into the above-described seatings and thus keeping the two side pieces attached to the base.

As is shown in Figure 1, collars 25, made of nylon for example, are fitted into the respective through holes 19 of the base 11. These collars serve to reduce the diameter of the holes in the cases in which, as in the illustrated example, the uprights have a section smaller than the section of the holes. This measure enhances the use versatility of the base.

According to embodiments of the invention to be used in case merchandise sensitive to temperature leaps has to be stored and transported, the hollow body of the base is filled with a heat insulation material or with a eutectic solution of the same type as is usually utilized in the so-called eutectic plates.

According to another embodiment that can be used with advantage in case urgent or valuable merchandise has to be stored and transported, in the hollow body of the base there may be accommodated a satellite transmission system to ascertain the position of the trolley.

What has been said above makes it clear that the objects of the invention are fully attained. In fact, the trolley base in accordance with the invention is a light and at the same time robust structure that can be realized in an economic manner with automatic equipment and in a brief space of time. Furthermore, the hollow body of the base can be realized by utilizing plastic material, possibly capable of being recycled, that can readily be coloured with the desired shades and does not call for surface finishing and maintenance treatments.

Lastly, even though only one embodiment of the invention has been shown and described in detail, it is clear that many variants are possible within the ambit of the same inventive concept. For example, the reliefs formed on the walls of the base may also be very different in shape and number from the ones shown in order to satisfy particular functional and/or structural requirements, the surfaces of the base intended for the mounting of the wheel stirrups could be more or less than four and the means for fixing the side pieces to the base could be different from the ones shown and described. The trolley in accordance with the invention could likewise be different from the one described, always provided that it employs a base in accordance with the invention: the two side pieces, for example, could be realized by means of hot-welded steel wire or some other material and could also be more than two.

## Claims

1. A base of a trolley for the storage and transport of merchandise, **characterized in that** it comprises a hollow body (11) in plastic material obtained by means of an extrusion and blowing process.

2. A base in accordance with Claim 1, wherein the hollow body (11) comprises two walls that face each other with reliefs (15, 16) towards the inside of the body.

3. A base in accordance with Claim 2 of substantially quadrangular shape having a mounting surface for a stirrup (13) as support for a wheel in proximity of each of its four corners.

4. A base in accordance with Claim 3 having a through hole (19) in proximity of each of its four corners.

5. A base in accordance with Claim 4 comprising a collar (25) fitted into each of the through holes (19).

6. A base in accordance with any one of the preceding claims, wherein the hollow body (11) is filled with a heat insulation material.

7. A base in accordance with any one of Claims 1 to 5, wherein the hollow body (11) is filled with a eutectic solution.

8. A trolley for the storage and the transport of merchandise comprising a base (11) in accordance with any one of the preceding claims.

9. A trolley for the storage and the transport of merchandise comprising a base (11) in accordance with any one of Claims 4 to 7, four rod-shaped uprights (20) inserted in the through holes (19) of the base and at least two side pieces (14) supported by the four uprights (20).

10. A trolley in accordance with Claim 9, wherein the side pieces (14) are formed by panels (21), each of which has two through holes that extend parallel to its two opposite sides for the passage of the respective uprights.

11. A trolley in accordance with Claim 9 or Claim 10, comprising coupling means (22, 23, 24) between the base and the side pieces (14).

12. A trolley in accordance with Claim 11, wherein the coupling means comprise an elastic element (24) associated with each side piece and shaped in such a manner as to become hooked onto the base (11) and the side piece (14) by means of a snap fit.

13. A trolley in accordance with any one of Claims 10 to 12, wherein the panels (21) comprise a hollow body in plastic material obtained by means of extrusion and blowing.
